# EUROPÄISCHE PATENTSCHRIFT

(11) **EP 0 822 315 B1**
(45) Veröffentlichungstag und Bekanntmachung des Hinweises auf die Patenterteilung: **04.12.2002**
(21) Anmeldenummer: 97104917.6
(22) Anmeldetag: 22.03.1997
(51) Int. Cl.: E06B 9/88

(54) **Schaltungsanordnung zur Steuerung von elektomotorischen Antrieben für auf-und abwickelbare Behänge**
Circuitry for controlling electrically powered drives for roller blinds
Circuit de contrôle de moteurs électriques pour stores enroulables

(30) Priorität: 29.07.1996 DE 19630491
(43) Veröffentlichungstag der Anmeldung: 04.02.1998
(73) Patentinhaber: Ernst Selve GmbH & Co. KG, D-58513 Lüdenscheid (DE)
(72) Erfinder: Weiper, Jost Dr., D-57076 Siegen (DE); Achenbach, Jens., D-58515 Lüdenscheid (DE); Hoffmann, Helmut, D-57489 Drolshagen (DE)
(74) Vertreter: Köchling, Conrad-Joachim

(56) Entgegenhaltungen:
- EP-A- 0 152 888
- EP-A- 0 426 577
- EP-A- 0 703 344
- DE-A- 3 803 119
- DE-A- 4 106 033
- DE-A- 4 221 640
- US-A- 4 499 463

## Beschreibung

Die Erfindung betrifft eine Schaltungsanordnung zur Steuerung von elektromotorischen Antrieben für auf- und abwickelbare Behänge wie Rolladen, Rolltore, Sonnenblenden und dergleichen Elemente, wobei der Antrieb eine Motorwicklung für Rechtslauf und eine Motorwicklung für Linkslauf aufweist, an die alternativ eine Versorgungsspannung anlegbar ist, wobei zwischen dem Phasenleiter der Stromzuführung und den Zuleitungen zu den Motorwicklungen je ein Schalter zur Verbindung von Phasenleiter und jedem Zuleiter geschaltet ist, oder eine Gleichstromwicklung aufweist, wobei durch Umpolen der Gleichstromversorgungsspannung die Drehrichtung des Antriebs geändert werden kann.

Bei herkömmlichen elektromotorischen Antrieben für Rolläden oder dergleichen werden Rohrmotore eingesetzt, die in die Wickelwelle des entsprechenden Behanges einsteckbar sind. Solche Rohrmotoren arbeiten fast ausschließlich positionsgesteuert. Zur Endabschaltung wird beispielsweise über eine von der Wickelwelle des Rolladens angetriebene Spindel ein Reiter verschoben, der bei Erreichen der gewünschten Endlage einen Schalter betätigt. Dadurch wird der Stromkreis für die eingeschaltete Motorwicklung unterbrochen. Die Position dieser Schalter wird durch eine mechanische Einstellvorrichtung so gewählt, daß der Reiter die Endschalter genau in den gewünschten Endlagen des Rolladens betätigt. Zum Einstellen der Schalterpositionen dienen Einstellritzel, Schlepphebel oder Drucktasten, die sich am Motorkopf des elektromotorischen Antriebes befinden.

Um die gewünschte Endlage einzustellen, wird der Motor in die gewünschte Endposition gefahren und der Einstellmechanismus am Motorkopf betätigt. Die Betätigungselemente sind dabei im Rolladenkasten angeordnet und deswegen nur schlecht zugänglich. Die Zugänglichkeit ist insbesondere dann erschwert, wenn der Rolladenkasten verkleidet oder tapeziert ist, und zum evtl. notwendigen Nachstellen der Motore der Rolladenkasten erst geöffnet werden muß, was zeit- und kostenaufwendig ist.

Aus der EP 0 534 894 B1 und der DE 44 40 449 A1 sind schon Verfahren und Vorrichtungen zur Stillstandssteuerung von einem Elektromotor enthaltenden Antrieb für Rolläden oder dergleichen bekannt, wobei dort die Schaltmechanismen so aufgebaut sind, daß der entsprechende Elektromotor abgeschaltet wird, sobald der Antrieb einen mechanischen Widerstand erfaßt. Dies bedeutet aber, daß der entsprechende Behang in den Endlagen gegen einen mechanischen Anschlag anfahren muß, um den Abschaltvorgang zu bewirken. Dies kann mit dem Nachteil verbunden sein, daß erhebliche mechanische Belastungen auf die entsprechenden Anschläge ausgeübt werden, wobei bei Rolläden der eine Anschlag beispielsweise durch die Fensterbank einer Fensteröffnung gebildet werden kann, der andere Anschlag in Aufwärtsrichtung aber durch entsprechende Anschlagleisten oder dergleichen am Einführspalt des Rolladens im Bereich des Rolladenkastens ausgebildet sein muß.

Bei Rolläden sind die auftretenden Kräfte wesentlich von der Wickelrichtung, dem Gewicht des Behanges und von der Wickelposition abhängig. Da die kraftgesteuerten Stillstandssteuerungen so geartet sind, daß sie die maximal auftretende Kraft noch nicht zum Abschalten führt, werden nicht unerhebliche mechanische Belastungen auf die entsprechenden Anschlagbereiche bzw. auf den Rolladen oder dergleichen selbst ausgeübt.

Bei instabilen Behängen, wie beispielsweise Sonnenblenden oder textilartigen Behängen ist die Steuerung durch Anfahren von Endanschlägen nur mit mechanischen Zusatzeinrichtungen möglich.

Ausgehend von diesem Stand der Technik liegt der Erfindung die Aufgabe zugrunde, eine elektrische bzw. elektronische Schaltungsanordnung zu schaffen, mit der unter Vermeidung von mechanischen Endanschlägen eine einfache Einstellung der Endlagen des Behanges ermöglicht ist, ohne daß dazu der Rolladenkasten oder dergleichen geöffnet werden muß.

Zur Lösung dieser Aufgabe wird vorgeschlagen, daß der Schalter derart ausgebildet ist, daß zusätzlich zur alternativen Anschaltung der Motorwicklungen auch eine gleichzeitige Anschaltung beider Zuleitungen zu den Motorwicklungen ermöglicht ist, daß in die Zuleitugen zu den Motorwicklungen zwischen den Schalter und die Motorwicklung ein elektronisches Mittel, insbesondere Schaltelement, eingeschaltet ist, das von einer Steuereinheit angesteuert ist, die eingangsseitig mit den Zuleitungen gekoppelt ist und den Zustand der Zuleitungen (spannungsführend oder spannungsfrei) erfaßt und das Schaltelement betätigt, so daß bei einer spannungsführenden Zuleitung die Zuleitung zu der entsprechenden Motorwicklung angeschlossen wird und bei Spannung an beiden Zuleitungen beide Zuleitungen abgetrennt werden, daß die Steuereinheit mit einem Datenspeicher kommuniziert, in dem funktionswesentliche Daten für die Schaltung der elektromotorischen Antriebe ablegbar und abrufbar sind, die mit aktuellen Daten verglichen werden, die von der Steuereinheit erfaßt werden, wobei die Steuereinheit Schaltvorgänge durch Abgleich der Datenmuster auslöst und die dabei vorliegenden aktuellen Daten dem Datenspeicher zuführt, der diese speichert, und daß die Steuereinheit durch die Anschaltung beider Zuleitungen an den Phasenleiter in einen Programmierzustand versetzbar ist, in welchem durch alternative Anschaltung der Zuleitungen an den Phasenleiter die Motorwicklungen erregbar sind und die aktuellen funktionswesentlichen Daten erfaßt und im Datenspeicher als Vergleichsdaten abgelegt werden.

Diese Schaltungsanordnung ermöglicht die elektronische Endabschaltung und die Einstellung der Endlagen des Behanges, indem dazu die Zuleitung des elektromotorischen Antriebes für elektrische Signalfolgen benutzt wird. Die Einstellung ist damit von dem Bedienschalter für das Auf- und Abwärtsverfahren des Behanges möglich, ohne daß der Rolladenkasten geöffnet werden müßte. Sie ist daher äußerst schnell und kostengünstig durchführbar.

Bevorzugt ist dabei vorgesehen, daß die funktionswesentlichen aktuellen Daten durch ein Erfassungselement erfaßt und in die Steuereinheit eingelesen werden.

Zudem kann bevorzugt sein, daß die Abspeicherung der Daten in der Steuereinheit bzw. im Speicher dadurch initiiert wird, daß beide Zuleitungen kurzzeitig an den Phasenleiter angeschaltet werden.

Auch kann bevorzugt sein, daß als funktionswesentliche Kriterien (Daten) alternativ oder kummulativ folgende antriebsspezifische Parameter erfaßt werden:

Motorposition (Winkellage bei Auf- oder Abwärtslauf), Drehmoment oder Drehmomentänderung am Abtrieb des Motors oder an der damit gekoppelten Wickelwelle des Behanges, Phasenverschiebung zwischen den Motorwicklungen.

In an sich bekannter Weise ist vorgesehen, daß die Schaltungsanordnung im rohrförmigen Gehäuse eines Rohrmotors als elektromotorischer Antrieb installiert ist und mit einem externen Befehlsgeber elektrisch verbunden ist.

Die Erfindung ist nachstehend anhand eines Ausführungsbeispieles erläutert.

Es zeigt:
- Fig. 1: eine erfindungsgemäße Schaltungsanordnung mit einem 2-Phasen Wechselstrommotor;
- Fig. 2: desgleichen mit Gleichstrommotor.

In der Zeichnungsfigur ist eine prinzipielle Schaltungsanordnung gemäß der Erfindung dargestelt. Die Bezeichnung der Einzelelemente ist wie folgt. L1 ist der Phasenleiter des Versorgungsnetzes, N ist der Null-Leiter des Versorgungssystemes, nicht in der Zeichnung dargestellt ist der Schutzleiter PE des Versorgungssystems, mit 5 ist eine Anschlußklemme der Schaltungsanordnung für den Null-Leiter N bezeichnet, mit 3 ist eine Klemme für den Anschluß des Phasenleiters L1 für die Laufrichtung A (beispielsweise aufwärts) bezeichnet, während mit 4 eine Klemme für den Phasenleiter L1 für die entgegengesetzte Laufrichtung B bezeichnet ist. Mit 1 und 2 sind Schalter bezeichnet, die zwischen Phasenleiter L1 und den Klemmen 3 bzw. 4 angeordnet sind. Mit 6 ist eine Stromversorgungseinrichtung bezeichnet. Mit 7 ist eine Steuereinheit, mit 8 und 9 eine Signalanpassung, mit 10 ein Schaltelement, mit 11 ein elektromotorischer Antrieb, mit 12 die erste Wicklung des Antriebes, mit 13 die zweite Wicklung des Antriebes, mit 14 der Motorkondensator, mit 15 ein Thermoschutzschalter, mit 16 ein Positionsgeber und mit 17 ist ein Datenspeicher bezeichnet.

Im Ausführungsbeispiel ist die Klemme 5 permanent mit dem Null-Leiter N des Versorgungsnetzes verbunden. Die Klemme 3 wird mit dem Phasenleiter L1 des Versorgungsnetzes verbunden, wenn der Schalter 1 betätigt (geschlossen) wird. Die Klemme 4 wird mit der Phase L1 des Versorgungsnetzes verbunden, wenn der Schalter 2 betätigt wird.

Bei herkömmlichen Motoren müssen die Schalter 1 und 2 mechanisch gegeneinander verriegelt sein, damit die Klemmen 3 und 4 niemals gleichzeitig mit dem Phasenleiter L1 verbunden sind. In diesem Falle würde nämlich der Motor zerstört werden.

Für die erfindungsgemäße Schaltungsanordnung werden aber unverriegelte Schalter oder Taster eingesetzt, um die Klemmen 3 bzw. 4 gleichzeitig bestromen zu können.

Im Normalbetrieb ist der Schaltungsablauf wie folgt.

Die Stromversorgungseinrichtung 6, die an die Zuleitungen zu den Motorwicklungen 12, 13 angeschlossen ist, generiert eine Speisespannung für die Steuereinheit 7 und den Datenspeicher 17, wenn mindestens eine der beiden Klemmen 3 oder 4 durch Schließen der Schalter 1 bzw. 2 mit dem Phasenleiter L1 verbunden ist. Das Netzteil enthält einen Energiespeicher, so daß die angeschlossenen Baugruppen 7 und 17 noch für eine kurze Zeit betriebsfähig bleiben, wenn die Klemmen 3 und 4 vom Netz getrennt sind, also die Schalter 1 und 2 geöffnet sind.

Die Steuereinheit 7 erkennt über eine Signalanpassung 8 bzw. 9, welche der beiden Klemmen 3 oder 4 mit der Phase L1 verbunden ist und führt abhängig davon unterschiedliche Funktionen aus. Dazu ist die Signalanpassung 8 mit der Zuleitung zu der Wicklung 12 des elektromotorischen Antriebes 11 verbunden, während die Signalanpassung 9 mit der Zuleitung zu der zweiten Wicklung 13 verbunden ist.

Ist der Schalter 1 geschlossen und somit die Klemme 3 mit dem Phasenleiter L1 verbunden, so schließt die Steuereinheit 7 den oberen Kontakt im Schaltelement 10. Dadurch wird die Wicklung 12 unter Spannung gesetzt und der Motor 11 dreht in der einen Laufrichtung A. Durch den am Anker des Motors 11 angekoppelten Positionsgeber 16 erkennt die Steuereinheit 7 die Position des Motors 11. Diese Position wird fortlaufend von der Steuereinheit 7 überwacht und mit im Datenspeicher 17 gespeicherten Endpositionen verglichen. Wir der Schalter 1 geöffnet bevor die Endposition erreicht ist oder wird die Endposition für die Laufrichtung A erreicht, so öffnet die Steuereinheit 7 den zuvor geschlossenen Kontakt in dem Schaltelement 10 und speichert die erreichte Position im Datenspeicher 17 ab. Der Motor 11 wird spannungsfrei und stoppt. Zusätzlich fällt beispielsweise eine Magnetbremse bei den in diesem Ausführungsbeispiel verwendeten Bremsmotor ein. Wird lediglich die Klemme 4 durch Schließen des Schalters 2 mit dem Phasenleiter L1 verbunden, erfolgt der gleiche Vorgang, jedoch wird der untere Kontakt des Schaltelementes 10 geschlossen und somit die Wicklung 13 unter Spannung gesetzt. Der Motor dreht in entgegengesetzter Laufrichtung B.

Werden beide Schalter 1, 2 innerhalb eines kurzen Zeitraumes von beispielsweise 300 ms geschlossen, so erkennt die Steuereinheit 7 über die Signalanpassung 8 und 9, daß beide Klemmen 3 und 4 Netzspannung führen, also an den Phasenleiter L1 angeschlossen sind. Dieser Zustand wird als Programmierbefehl interpretiert. Die Kontakte der Schalteinrichtung 10 bleiben beide geöffnet, so daß der Motor 11 spannungsfrei ist. Bleibt dieser Zustand für mindestens einen gewissen Zeitraum, der beliebig vorwählbar ist und im Ausführungsbeispiel 5 Sekunden beträgt, erhalten, so erkennt die Steuerung, daß die im Datenspeicher 17 abgelegten Endpositionen neu eingestellt werden sollen.

Die Steuereinheit 7 erwartet nun zunächst die Festlegung des einen, beispielsweise unteren Endpunktes. Dazu wird durch wahlweises Schließen von nur einem der Schalter 1 oder 2 die gewünschte untere Endlage angefahren. Die Steuereinheit 7 erfaßt dabei fortlaufend die Motorposition über den Positionsgeber 16. Ist die untere Endlage erreicht, werden beide Schalter 1, 2 für einen kurzen Zeitraum von beispielsweise 2 Sekunden geschlossen. Hierdurch wird die Steuereinheit 7 derart angesteuert, daß die aktuelle Motorposition als untere Endposition in den Datenspeicher 17 eingelesen und abgespeichert wird. Der vorher ermittelte Wert wird also in den Datenspeicher 17 überschrieben.

Als nächstes wird die gewünschte obere Endposition in der gleichen Art und Weise wie zuvor beschrieben angefahren. Es wird dazu der entsprechende Schalter, beispielsweise 2 erneut betätigt, um den Motor in umgekehrter Richtung in Drehung zu versetzen, bis die obere Endposition erreicht ist. Zur Übernahme der Daten werden wiederum beide Schalter 1, 2 gleichzeitig für einen kurzen Zeitraum, beispielsweise mindestens 2 Sekunden, geschlossen. Die Steuereinheit 7 speichert dann die aktuelle Motorposition als obere Endposition im Datenspeicher 17 ab. Der ermittelte Wert wird also ebenso überschrieben. Damit sind die neuen Endlagenwerte festgelegt und der Rolladen wird durch den Motor 11 nur innerhalb dieser neuen Grenzen bewegt.

Die erfindungsgemäße Schaltungsanordnung kann auch andere Parameter erfassen, um die entsprechenden Endpositionen des Motors abzuspeichern. Beispielsweise können Drehmomentwerte, Winkelstellungen oder ähnliche funktionswesentliche Daten durch die Steuereinheit 7 erfaßt und im Speicher 17 abgelegt und zur Endabschaltung des Motors verwendet werden. Auch der Einsatzzweck der Schaltungsanordung ist nicht darauf beschränkt, daß lediglich die Endabschaltung des Motors bestimmt wird, sondern es sind auch andere Funktionen zu realisieren. Beispielsweise könnte der entsprechende Antrieb so eingestellt werden, daß er nicht in die Endlagen läuft, sondern daß er in einer beliebigen Zwischenlage anhält und von dieser wieder in die entgegengesetzte Endlage überführt wird. Wesentlicher Vorteil der erfindungsgemäßen Ausbildung ist dabei, daß die Einstellung der Endlagen oder sonstigen gewünschten Verlaufsdaten in einfacher Weise von den Schaltern 1, 2 her möglich ist, ohne daß dazu der Rolladenkasten oder dergleichen geöffnet werden müßte, in welchem der Antrieb, insbesondere Rohrmotor, eingebaut ist. Auch kann auf mechanische Endanschläge verzichtet werden.

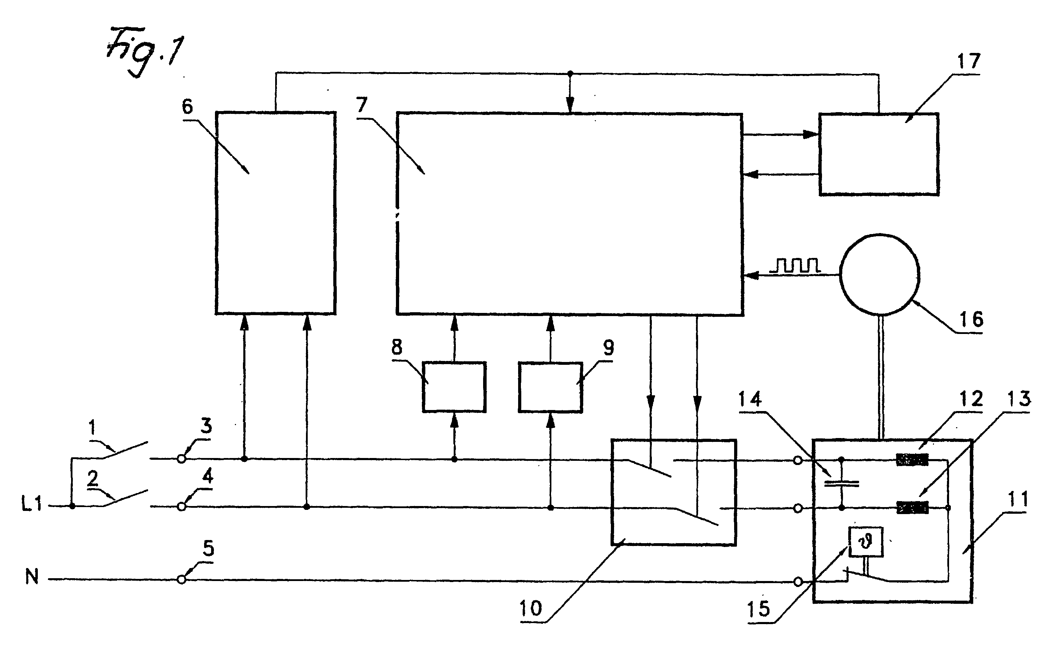

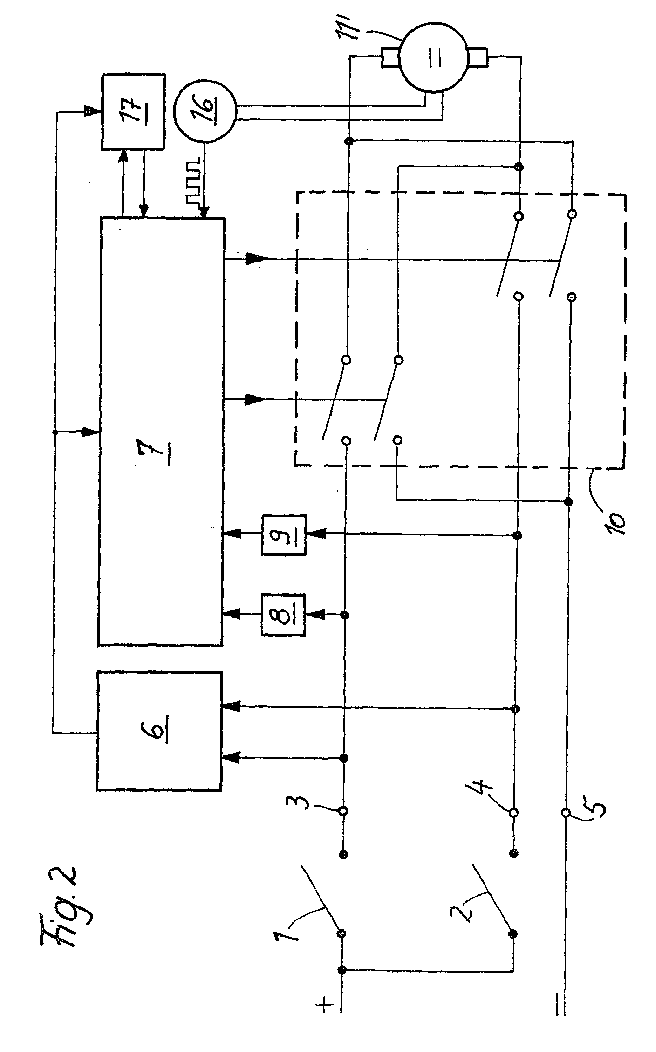

Während die in Figur 1 gezeigte Anordnung das Erfindungsprinzip anhand eines 2-Phasen-Wechselstrommotors erläutert, zeigt Figur 2 eine prinzipiell gleiche Schaltungsanordnung mit einem Gleichstrommotor 11. Gleiche Funktionselemente sind mit den gleichen Bezugsziffern wie in Figur 1 bezeichnet. Hierbei erfolgt bei Schließen des Schalters 1 oder 2 die Betätigung des Motors 11 in der einen oder anderen Drehrichtung durch Umpolung mittels der Schalteinrichtung 10. Ansonsten ist die Funktion analog der Ausführungsform nach Figur 1.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Elektrische Schaltungsanordnung zur Steuerung von elektromotorischen Antrieben (11) für auf- und abwickelbare Behänge wie Rolladen, Rolltore, Sonnenblenden und dergleichen Elemente, wobei der Antrieb eine Motorwicklung (12) für Rechtslauf und eine Motorwicklung (13) für Linkslauf aufweist, an die alternativ eine Versorgungsspannung anlegbar ist, wobei zwischen dem Phasenleiter (L1) der Stromzuführung und den Zuleitungen zu den Motorwicklungen (12,13) je ein Schalter (1,2) zur Verbindung von Phasenleiter (L1) und jeder Zuleitung geschaltet ist, oder eine Gleichstromwicklung aufweist, wobei durch Umpolen der Gleichstromversorgungsspannung die Drehrichtung des Antriebs geändert werden kann, **dadurch gekennzeichnet, daß** der Schalter (1,2) derart ausgebildet ist, daß zusätzlich zur alternativen Anschaltung der Motorwicklungen (12,13) oder zur alternativen Umpolung der Gleichstromversorgungsspannung und der dadurch bedingten Drehrichtungsumkehr des Motors (11') auch eine gleichzeitige Anschaltung beider Zuleitungen zu den Motorwicklungen (12,13) bzw. zum Motor (11') ermöglicht ist, daß in die Zuleitungen zu den Motorwicklungen (12,13) bzw. zum Motor (11') zwischen den Schalter (1,2) und die Motorwicklungen (12,13) bzw. Motor (11') ein elektronisches Mittel, insbesondere Schaltelement (10), eingeschaltet ist, das von einer Steuereinheit (7) angesteuert ist, die eingangsseitig mit den Zuleitungen gekoppelt ist und den Zustand der Zuleitungen (spannungsführend oder spannungsfrei) erfaßt und das Schaltelement (10) betätigt, so daß bei einer spannungsführenden Zuleitung die Zuleitung zu der entsprechenden Motorwicklung (12 oder 13) angeschlossen wird bzw. der Motor (11') umgepolt wird und bei Spannung an beiden Zuleitungen beide Zuleitungen abgetrennt werden, daß die Steuereinheit (7) mit einem Datenspeicher (17) kommuniziert, in dem funktionswesentliche Daten für die Schaltung der elektromotorischen Antriebe (11) ablegbar und abrufbar sind, die mit aktuellen Daten verglichen werden, die von der Steuereinheit (7) erfaßt werden, wobei die Steuereinheit (7) Schaltvorgänge durch Abgleich der Datenmuster auslöst und die dabei vorliegenden aktuellen Daten dem Datenspeicher (17) zuführt, der diese speichert, und daß die Steuereinheit (7) durch die Anschaltung beider Zuleitungen an den Phasenleiter (L1) bzw. durch Schließen beider Schalter (1,2) des Gleichstromkreises des Motors (11') in einen Programmierzustand versetzbar ist, in welchem durch alternative Anschaltung der Zuleitungen an den Phasenleiter (L1) die Motorwicklungen (12 oder 13) erregbar sind bzw. durch alternative Schließung der Schalter (1,2) des Gleichstromkreises die Umpolung des Motors (11') erfolgt und die aktuellen funktionswesentlichen Daten erfaßt und im Datenspeicher (17) als Vergleichsdaten abgelegt werden.

2. Schaltungsanordnung nach Anspruch 1, **dadurch gekennzeichnet, daß** die funktionswesentlichen aktuellen Daten durch ein Erfassungselement (16) erfaßt und in die Steuereinheit (7) eingelesen werden.

3. Schaltungsanordnung nach Anspruch 1 oder 2, **dadurch gekennzeichnet, daß** die Abspeicherung der Daten in der Steuereinheit (7) bzw. im Speicher (17) dadurch initiiert wird, daß beide Zuleitungen kurzzeitig an den Phasenleiter (L1) angeschaltet werden bzw. beide Schalter (1,2) des Gleichspannungskreises kurzzeitig geschlossen werden.

4. Schaltungsanordnung nach einem der Ansprüche 1 bis 3, **dadurch gekennzeichnet, daß** als funktionswesentliche Kriterien (Daten) alternativ oder kummulativ folgende antriebsspezifische Parameter erfaßt werden:
Motorposition (Winkellage bei Auf- oder Abwärtslauf), Drehmoment oder Drehmomentänderung am Abtrieb des Motors (11) oder an der damit gekoppelten Wickelwelle des Behanges, Phasenverschiebung zwischen den Motorwicklungen (12,13).

5. Schaltungsanordnung nach einem der Ansprüche 1 bis 4, **dadurch gekennzeichnet, daß** die Schaltungsanordnung im rohrförmigen Gehäuse eines Rohrmotors als elektronischer Antrieb installiert ist und mit einem externen Befehlsgeber elektrisch verbunden ist.

## Claims

1. Electric circuitry for controlling electromotive drives (11) for hangings that can be wound up and down, such as rolling shutters, sliding doors, sun blinds and similar items, wherein the drive comprises a motor winding (12) for right-handed rotation and a motor winding (13) for left-handed rotation, to which a supply voltage can be alternately applied, wherein a switch (1, 2) for connecting phase conductors (L1) and each lead is connected between the phase conductor (L1) of the voltage feed and the leads to the motor windings (12, 13), or comprises a dc winding, in which the direction of rotation of the drive can be altered by the pole reversal of the dc power supply voltage,
**characterised in that** the switch (1, 2) is configured in such a manner that, in addition to the alternative connection of the motor windings (12, 13) or to the alternative pole reversal of the dc power supply voltage and the reversal in the direction of rotation of the motor (11') caused thereby, a simultaneous connection of both leads to the motor windings (12, 13) or to the motor (11') is also made possible,
**in that** an electronic means, in particular a switching component (10), is connected into the leads to the motor windings (12, 13) or to the motor (11') between the switch (1, 2) and the motor windings (12, 13) and motor (11') respectively, which means is controlled by a control unit (7) which at the input side is coupled to the leads and detects the state of the leads (voltage-carrying or voltage-free) and actuates the switching component (10) so that, in the case of a voltage-carrying lead, the lead is connected to the corresponding motor winding (12 or 13) and the motor (11') is pole-reversed and in the case of voltage at both leads, both leads are disconnected,
**in that** the control unit (7) communicates with a data memory (17), in which functionally essential data for the switching of the electromotive drives (11) can be deposited and fetched, which is compared with current data which is recorded by the control unit (7), with the control unit (7) triggering switching operations by collating the data models and supplying the current data available in this case to the data memory (17), which stores it,
**and in that** by connecting both leads to the phase conductor (L1) or by closing both switches (1, 2) of the dc circuit of the motor (11'), the control unit (7) can be set into a programming state in which the motor windings (12 or 13) can be excited by alternative connection of the leads to the phase conductor (L1) or the pole reversal of the motor (11') takes place by alternative closing of the switches (1, 2) of the dc circuit and the current, functionally essential items of data are recorded and are deposited in the data memory (17) as comparison data.

2. Circuitry according to Claim 1,
**characterised in that** the functionally essential current items of data are recorded by a recording element (16) and are read into the control unit (7).

3. Circuitry according to Claim 1 or 2,
**characterised in that** the storage of the data in the control unit (7) or in the memory (17) is initiated by the fact that both leads are briefly connected to the phase conductor (L1) or both switches (1,2) of the dc circuit are briefly closed.

4. Circuitry according to one of Claims 1 to 3,
**characterised in that** alternatively or cumulatively following, drive-specific parameters are recorded as functionally essential criteria (data):
motor position (angular position during upward or downward movement), torque or change in torque at the output of the motor (11) or at the winding shaft of the hanging coupled therewith, phase shift between the motor windings (12, 13).

5. Circuitry according to one of Claims 1 to 4,
**characterised in that** the circuitry is installed in the tubular housing of a tubular motor as an electronic drive and is electrically connected to an external command generator.

## Revendications

1. Circuit électrique pour la commande de moteurs électriques (11) pour éléments suspendus enroulables et déroulables tels que volets roulants, portes roulantes, stores et analogues, dans lequel le mécanisme d'entraînement présente un enroulement de moteur (12) pour la marche à droite et un enroulement de moteur (13) pour la marche à gauche auxquels on peut appliquer alternativement une tension d'alimentation, un commutateur (1, 2) étant connecté entre le conducteur de phase (L1) de l'arrivée de courant et chacun des conducteurs d'alimentation des enroulements de moteur (12, 13) pour la connexion du conducteur de phase (L1) et de chaque conducteur d'alimentation, ou présente un enroulement à courant continu, un changement du sens de rotation du mécanisme d'entraînement étant possible par inversion de polarité de la tension d'alimentation continue, **caractérisé par le fait que** le commutateur (1, 2) est conçu de manière à permettre, en plus de la connexion alternative des enroulements de moteur (12, 13) ou de l'inversion de polarité alternative de la tension d'alimentation continue et de l'inversion de sens de rotation du moteur (11') consécutive, une connexion simultanée des deux conducteurs d'alimentation des enroulements de moteur (12, 13) ou du moteur (11'), que dans les conducteurs d'alimentation des enroulements de moteur (12, 13) ou du moteur (11') est intercalé entre le commutateur (1, 2) et les enroulements de moteur (12, 13) un moyen électronique, en particulier un élément logique (10), qui est commandé par une unité de commande (7), laquelle est couplée du côté de l'entrée avec les conducteurs d'alimentation, détecte l'état des conducteurs d'alimentation (sous tension ou hors tension) et actionne l'élément logique (10) de façon que si un conducteur d'alimentation est sous tension le conducteur d'alimentation est connecté à l'enroulement de moteur correspondant (12 ou 13) ou la polarité du moteur (11') est inversée et que si les deux conducteurs d'alimentation sont sous tension les deux conducteurs d'alimentation sont déconnectés, que l'unité de commande (7) communique avec une mémoire de données (17) dans laquelle peuvent être stockées et consultées des données importantes pour le fonctionnement du circuit des moteurs électriques (11), lesquelles sont comparées avec des données actuelles qui sont acquises par l'unité de commande (7), cette dernière déclenchant des processus de commutation par alignement des structures de données et amenant les données actuelles alors présentes à la mémoire de données (17) qui les mémorise, et que l'unité de commande (7) peut être mise, par connexion des deux conducteurs d'alimentation au conducteur de phase (L1) ou par fermeture des deux commutateurs (1, 2) du circuit de courant continu du moteur (11'), dans un état de programmation dans lequel on peut exciter les enroulements de moteur (12 ou 13) par connexion alternative des conducteurs d'alimentation au conducteur de phase (L1) ou inverser la polarité du moteur (11') par fermeture alternative des commutateurs (1, 2) et où les données importantes pour le fonctionnement actuelles sont acquises et enregistrées dans la mémoire de données (17) pour servir de données de référence.

2. Circuit selon la revendication 1, **caractérisé par le fait que** les données importantes pour le fonctionnement actuelles sont acquises par un élément d'acquisition (16) et lues dans l'unité de commande (7).

3. Circuit selon la revendication 1 ou 2, **caractérisé par le fait que** la mémorisation des données dans l'unité de commande (7) ou dans la mémoire (17) est initiée par une brève connexion des deux conducteurs d'alimentation au conducteur de phase (L1) ou par une brève fermeture des deux commutateurs (1, 2).

4. Circuit selon l'une des revendications I à 3, **caractérisé par le fait que** sont acquis alternativement ou cumulativement comme critères (données) importants pour le fonctionnement les paramètres spécifiques à l'entraînement suivants :
position du moteur (position angulaire en montée ou en descente), couple ou variation de couple à la sortie du moteur (11) ou à l'arbre d'enroulement de l'élément suspendu couplé à celle-ci, déphasage entre les enroulements de moteur (12, 13)

5. Circuit selon l'une des revendications 1 à 4, **caractérisé par le fait que** le circuit est installé comme commande électronique dans le carter tubulaire d'un moteur tubulaire et relié électriquement à un émetteur d'ordres externe.
